# EUROPEAN PATENT APPLICATION

(11) **EP 4 420 747 A1**
(43) Date of publication of application: **28.08.2024**
(21) Application number: 23768768.6
(22) Date of filing: 21.06.2023
(51) Int. Cl.: A63B 69/36, G06T 7/70

(54) **DISPLAY CONTROL DEVICE, METHOD, AND PROGRAM**

(30) Priority: 06.01.2023 JP 2023001027
(71) Applicant: Amplus Co., Ltd., Kohoku-hu Yokohama-shi, Kanagawa 2220033 (JP)
(72) Inventor: KURACHI Nobuhisa, Yokohama-shi Kanagawa 2220033 (JP)
(74) Representative: Klunker IP Patentanwälte PartG mbB
(86) International application number: PCT/JP2023/022888
(87) International publication number: WO 2024/147210

(57) **Abstract**

To provide a display control apparatus, a display control method, and a display control program capable of displaying accurate and stable information related to the movement trajectory of a clubhead.

A display control apparatus is equipped with: a captured image acquiring unit 21 that acquires a plurality of captured images of a swing of a golf club; a specific position detecting unit 22 that detects the position of a neck of the golf club included in each of the captured images; a trajectory information generating unit 23 that generates trajectory information of the position of the neck by linking positions of the neck which are detected in each of the captured images in the order that the plurality of captured images are captured; and a display control unit 24 that displays the trajectory information of the position of the neck.

## Description

### Technical Field

The present disclosure is related to a display control apparatus, a display control method, and a display control program for displaying information related to a swing of a golf club.

### Background Art

Conventionally, there are various apparatuses that capture images of a golfer during a swing to date. By providing the golfer with the recorded image of the swing, it becomes possible to promote the improvement of golf swing and enables the proper fitting of a golf club which is suited to the golfer.

For example, Patent Document 1 proposes to determine the quality of a swing by capturing images of a golfer's swing. In addition, Patent Documents 2 through 4 propose to display the clubhead path.

### [Background Art Documents]

### [Patent Documents]

[Patent Document 1]
   Japanese Patent No. 6544551
[Patent Document 2]
   Japanese Unexamined Patent Publication No. 2015-077351
[Patent Document 3]
   Japanese Unexamined Patent Publication No. 2015-198761
[Patent Document 4]
   Japanese Unexamined Patent Publication No. 2017-144130

### Summary

### [Technical Problem]

It is very important to be aware if a clubhead path in order to analyze a swing of a golf club.

As described above, Patent Document 1 discloses determining the quality of a swing of a golf club. However, Patent Document 1 does not disclose displaying a clubhead path.

In addition, Patent Documents 2 and 3 disclose calculating and displaying the clubhead path based on signals detected by sensors provided in the vicinities of grips of golf clubs.

However, the methods disclosed in Patent Documents 2 and 3 have a problem in the accuracy of calculating the position of the clubheads, because the sensors are provided in the vicinities of the grips. That is, since the clubhead path is affected by movement in the vicinity of a grip, it is not always possible to calculate the clubhead path with high accuracy.

Further, calculating the position of the center of gravity of a clubhead and obtaining the clubhead path thereof by discriminating images of the clubhead, for example, may be considered.

However, in the case that images of a golf club swing are captured from a predetermined direction, for example, the images of the clubhead included in the captured images change in shape every moment along with the swing, and include images in which the position of the center of gravity of the clubhead cannot be calculated. Therefore, it is difficult to accurately calculate the position of the clubhead from such images, and such a method lacks stability.

In view of the foregoing problems, the present disclosure provides a display control apparatus, a display control method, and a display control program capable of displaying accurate and stable information regarding a clubhead path.

### [Solution to the Problem]

A display control apparatus according to the present disclosure includes a captured image acquiring unit that acquires a plurality of captured images of a swing of a golf club; a specific position detecting unit that detects the position of a neck of the golf club included in each captured image; a trajectory information generating unit that generates trajectory information of the position of the neck based on positions of the neck which are detected in each of the captured images; and a display control unit that displays the information of a trajectory of the position of the neck.

### [Effect]

According to the display control apparatus of the present disclosure, the position of the neck of the golf club is detected from a plurality of captured images of the swing of the golf club, information regarding the movement trajectory of the position of the neck is generated based on the detected positions of the neck, and the information regarding the movement trajectory of the position of the neck is displayed. Therefore, it is possible to display accurate and stable information regarding a clubhead path.

### BRIEF DESCRIPTION OF THE DRAWINGS

Fig. 1 is diagram that illustrates the schematic configuration of a golf impact analysis system that employs an embodiment of the display control apparatus of the present disclosure.
Fig. 2 is a collection of diagrams that illustrate the position of a neck of a golf club in each captured image of a swing of the golf club.
Fig. 3 is a diagram that illustrates an example of display of information regarding a trajectory of the position of the neck of the golf club.
Fig. 4 is a collection of diagrams that illustrate an example of an animation display of the information regarding the trajectory of the position of the neck of the golf club.
Fig. 5 is a collection of diagrams that illustrate the position of the golf club neck and the position of a grip in each captured image of the swing of the golf club.

### Embodiments of the Disclosure

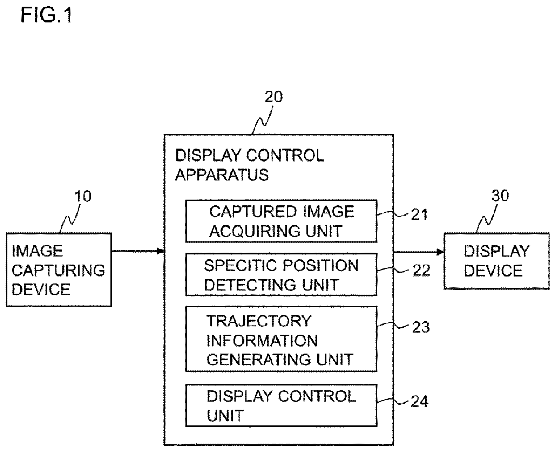

A golf swing analysis system that employs an embodiment of the display control apparatus of the present disclosure will be described in detail below with reference to the attached drawings. Fig. 1 is diagram that schematically illustrates the configuration of a golf swing analysis system 1 of the present embodiment.

The golf swing analysis system 1 of the present embodiment is equipped with an image capturing device 10, a display control apparatus 20, and a display device 30, as illustrated in Fig. 1. The image capturing device 10 and the display control apparatus 20, and the display control apparatus 20 and the display device 30 are communicably connected via wired or wireless connections, and are configured such that various signals can be communicated among these components.

The image capturing device 10 captures images of a swing of a golf club by a golfer. The image capturing device 10 is installed, for example, in front of a golfer who swings a golf club such that the entire golfer and the golf club are within an image capturable range. However, the position of the image capturing device 10 is not limited to such a configuration, and may be any position as long as the entire golf club is within an image capturable range.

The image capturing device 10 captures images of the golfer and the golf club at a predetermined frame rate. Captured images captured by the image capturing device 10 at the predetermined frame rate are output to the display control apparatus 20.

The display control apparatus 20 is equipped with a captured image acquiring unit 21, a specific position detecting unit 22, a trajectory information generating unit 23, and a display control unit 24.

The captured image acquiring unit 21 acquires a plurality of captured images output from the image capturing device 10.

The specific position detecting unit 22 detects the position of a neck of the golf club included in each captured image acquired by the captured image acquiring unit 21. Specifically, the specific position detecting unit 22 of the present embodiment has a learned model which is obtained by machine learning the relationship between a plurality of previously captured images of a golf club and position information of a neck of the golf club included in each of the captured images.

The specific position detecting unit 22 detects the position of the neck within each of the captured images by inputting each of the captured images acquired by the captured image acquiring unit 21 to the learned model. The learned model is generated by employing a convolutional neural network, for example, but is not limited to such a configuration, and machine learning may be conducted by employing other known machine learning models.

In addition, in the present embodiment, the specific position detecting unit 22 has the learned model. However, the present disclosure is not limited to such a configuration, and a learned model which is stored in an external server device separate from the display control apparatus 20 may be utilized.

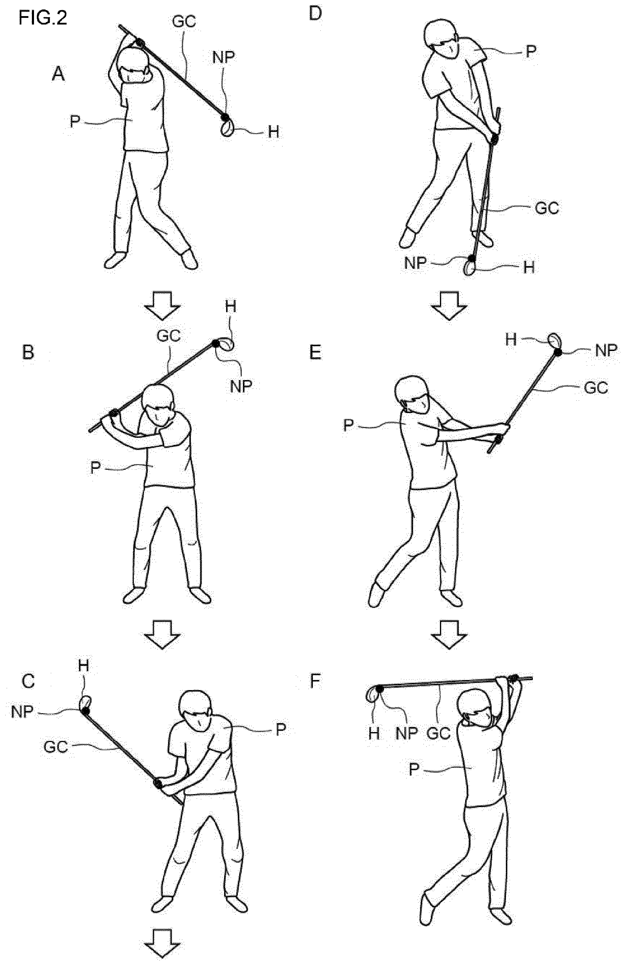

Fig. 2A through Fig. 2F are a collection of diagrams that illustrate six captured images which are captured from the start of the swing of a golf club GC by a golfer P, which were input to the above learned model, and in which the position of the neck output from the learned model is displayed superimposed on each of the six captured images. In Fig. 2A through Fig. 2F, the position N of the neck of the golf club GC is indicated by a circle. Note that in the description of the present embodiment, only the six captured images of Fig. 2A through Fig. 2F are shown for the sake of simplification. However, in reality, a number of captured images multiplied by the frame rate of the image capturing device 10 is acquired, and the position of the neck is detected in each of the captured images.

The trajectory information generating unit 23 generates trajectory information of neck positions based on the positions of the neck detected from a plurality of captured images. Specifically, the trajectory information generating unit 23 generates trajectory information by linking the positions of the neck detected from each captured image in the order in which the captured images are captured. Regarding how to link the respective positions of the neck, linking may be conducted based on a preset interpolation function, for example.

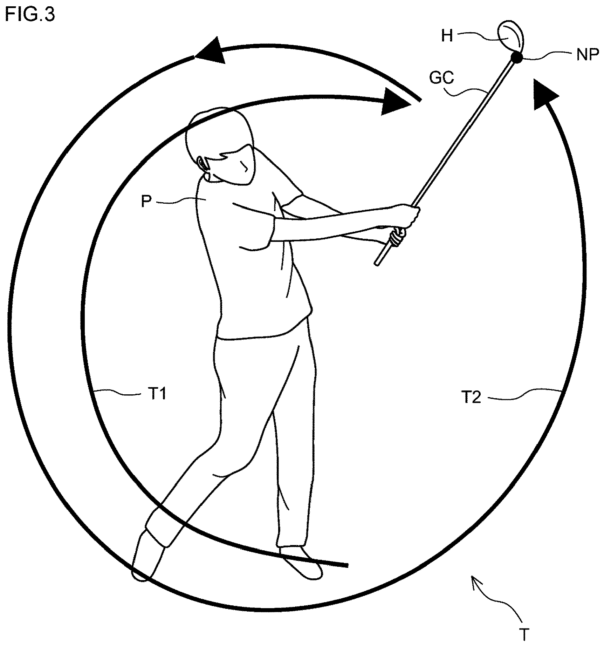

The display control unit 24 causes the display device 30 to display the trajectory information of the neck position generated by the trajectory information generating unit 23. FIG. 3 is a diagram that illustrates an example of trajectory information T of the position of the neck. Of the trajectory information T illustrated in FIG. 3, trajectory information T1 is trajectory information for when the golf club is swung upward, and trajectory information T2 is trajectory information for when the golf club is swung downward.

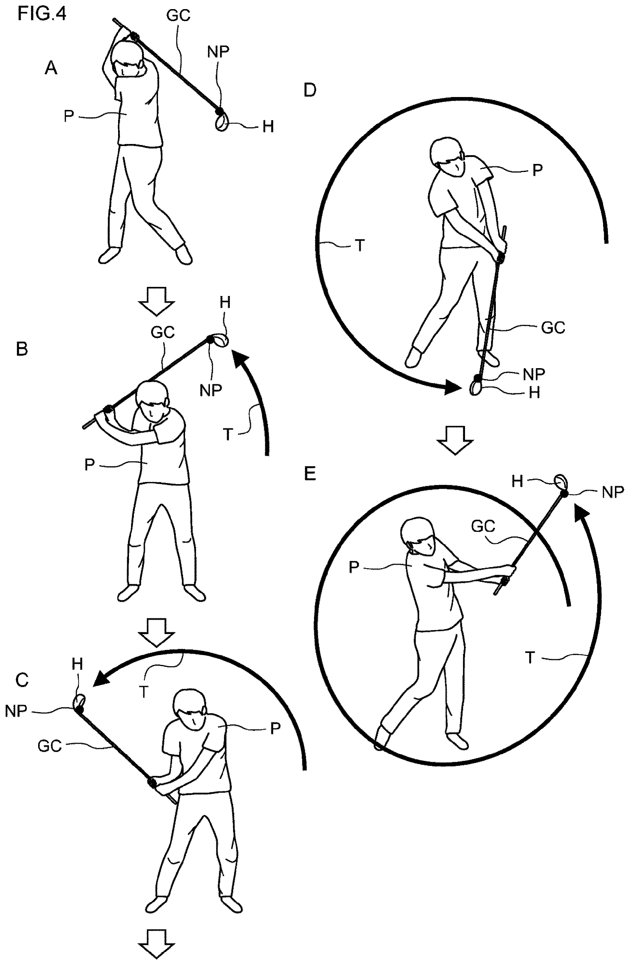

In addition, in the case that the trajectory information of the position of the neck is displayed by the display device 30, the trajectory information T of the position of the neck may be displayed superimposed on a predetermined captured image as illustrated in Fig. 3, for example. Alternatively, a plurality of captured images may be displayed as a video and trajectory information up to the point in time at which each captured image was captured may be sequentially switched and displayed. Thereby, trajectory information from the beginning of a swing to the end of the swing that sequentially extends according to the movement of the golf club during the swing may be displayed as an animation. Fig. 4A through Fig. 4F are a collection of diagrams that illustrate an example of trajectory information T which is sequentially switched for each captured image and displayed in the case that the above animation display is performed.

The display control apparatus 20 is constituted by a computer or the like, and is equipped with a CPU (Central Processing Unit), semiconductor memories such as ROM (Read Only Memory) and RAM (Random Access Memory), storage such as a hard disk, and hardware such as a communication I/F.

An embodiment of a display control program of the present disclosure is installed in a semiconductor memory or the storage of the display control apparatus 20. The captured image acquiring unit 21, the specific position detecting unit 22, the trajectory information generating unit 23, and the display control unit 24 described above function by causing the CPU to execute this display control program.

In the present embodiment, the display control program is executed by the CPU to cause the components of the display control apparatus 20 described above to function. However, a portion or the entirety of the functions to be executed by the display control program may be performed by an ASIC (Application Specific Integrated Circuit), an FPGA (Field Programmable Gate Array), or hardware such as other electric circuits.

The display device 30 has a display such as a liquid crystal display, and displays captured images and trajectory information of the position of the neck of the golf club described above. In addition, the display control apparatus 20 and the display device 30 may be realized by a tablet terminal. Further, the image capturing device 10, the display control apparatus 20, and the display device 30 may be realized by a tablet terminal having a camera function.

According to the golf swing analysis system 1 of the embodiment described above, the position of the neck of the golf club is detected from a plurality of captured images obtained by capturing the swing of the golf club. Trajectory information is generated based on the detected positions of the neck, and the trajectory information of the position of the neck is displayed.

The position of the neck of the golf club is very close to the position of the clubhead. Therefore, the trajectory information of the neck position is very similar to the trajectory information of the clubhead. In addition, the position of the neck of the clubhead does not change moment to moment as does images of the clubhead. Therefore, the detection accuracy from the captured images is higher compared to that for the clubhead.

Therefore, according to the golf swing analysis system 1 of the embodiment described above, it is possible to display accurate and stable information regarding the movement trajectory of the clubhead.

In addition, in the golf swing analysis system 1 of the embodiment described above, the specific position detecting unit 22 detects the position of the neck of the golf club. However, the specific position detecting unit 22 may additionally detect the position of a grip of the golf club. In this case, the specific position detecting unit 22 has a learned model obtained by machine learning the relationship between a plurality of previously captured images of a golf club and position information of a grip of the golf club included in each of the captured images

The specific position detecting unit 22 detects the position of the grip within each of the captured images by inputting each of the captured images acquired by the captured image acquiring unit 21 to the learned model. The learned model is generated by employing a convolutional neural network, for example, but is not limited to such a configuration, and machine learning may be conducted by employing other known machine learning models.

The learned model which is employed when detecting the position of the neck of the golf club and the learned model used for detecting the position of the grip may be prepared separately, or the position information regarding the neck and the position information of the grip may be machine learned simultaneously to prepare a common learned model.

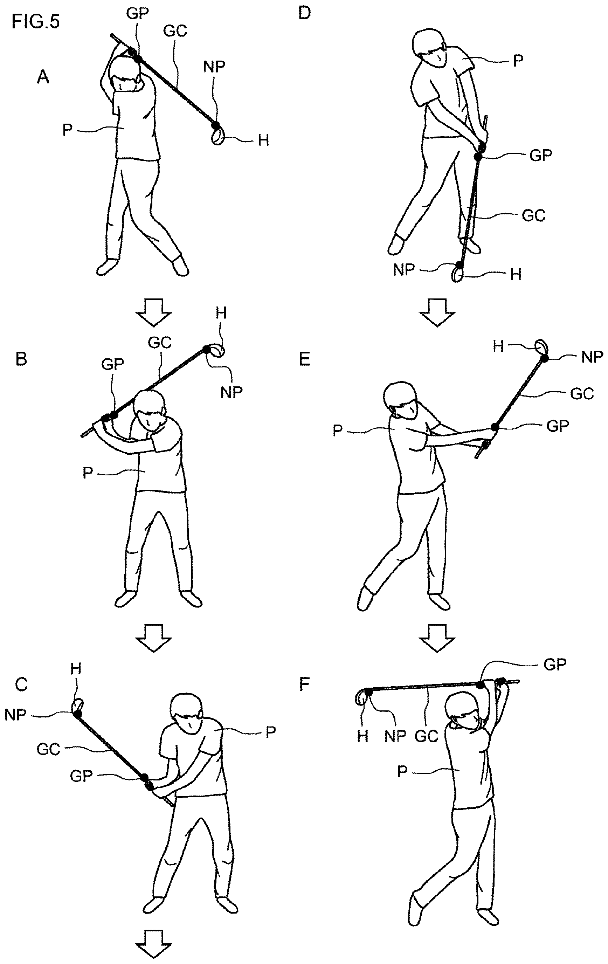

Fig. 5A through Fig. 5F are a collection of diagrams that illustrate six captured images which are captured from the start of the swing of a golf club GC by a golfer P, which were input to the above learned model, and in which the position of the neck and the position of the grip output from the learned model is displayed superimposed on each of the six captured images. In Fig. 5A through 5F, the position N of the neck of the golf club GC and the position G of the grip are indicated by circles. Note that in the description of the present embodiment, only the six captured images of Fig. 5A through Fig. 5F are shown for the sake of simplification. However, in reality, a number of captured images multiplied by the frame rate of the image capturing device 10 is acquired, and the positions of the neck and the grip are detected in each of the captured images.

Then, the display control unit 24 may generate a straight line that connects the position of the neck and the position of the grip in each of the captured images, and cause the display device 30 to display the straight line.

In the case that the straight line that connects the position of the neck and the position of the grip is displayed by the display device 30, the straight line may be superimposed on a predetermined captured image, for example. Alternatively, a plurality of captured images may be displayed as a video and the straight line at the point in time at which each captured image was captured may be sequentially switched and displayed. Thereby, the straight lines may be displayed as an animation in which the straight line for each captured image is sequentially added from the beginning of a swing to the end of the swing according to the movement of the golf club during the swing.

By displaying the straight line that connects the position of the neck and the position of the grip as described above, it is possible to check, for example, whether the swing is hand first.

In addition, a swing judging unit may be further provided. A straight line that connects the position of the neck and the position of the grip may be obtained when the clubhead impacts the golf ball (for example, the moment illustrated in FIG. 5D), for example. This straight line may be compared with a straight line drawn directly below from the grip position GP. The swing judging unit may judge whether the swing is good or bad by determining whether the swing is hand first.

The additional items below are disclosed with respect to the display control apparatus of the present disclosure.

### (Additional Items)

In the display control apparatus of the present disclosure, the specific position detecting unit may input each captured image acquired by the captured image acquiring unit into a learned model obtained by machine learning the relationship between a plurality of captured images of a golf club which are captured in advance and position information of a neck of the golf club included in each of the captured images, to detect the position of the neck in each of the captured images.

In the display control apparatus of the present disclosure, the specific position detecting unit may detect the position of a grip of a golf club included in each captured image.

In the display control apparatus of the present disclosure, the display control unit may display a straight line that connects the position of a neck and the position of a grip which are detected by the specific position detecting unit.

A display control method of the present disclosure obtains a plurality of captured images of a swing of a golf club, detects the position of a neck of the golf club which is included in each of the captured images, generates trajectory information of the position of the neck based on the position of the neck detected in each of the plurality of captured images, and displays the trajectory information of the position of the neck.

A display control program of the present disclosure causes a computer to execute the steps of obtaining a plurality of captured images of a swing of a golf club, detecting the position of a neck of the golf club which is included in each of the captured images, generating trajectory information of the position of the neck based on the position of the neck detected in each of the plurality of captured images, and displaying the trajectory information of the position of the neck.

### [Explanation of the Reference Numerals]

- 1: golf swing analysis system
- 10: image capturing device
- 20: display control apparatus
- 21: captured image acquiring unit
- 22: specific position detecting unit
- 23: trajectory information generating unit
- 24: display control unit
- 30: display device
- G: position of grip
- GC: golf club
- N: position of neck
- P: golfer
- T: trajectory information

## Claims

1. A display control apparatus, comprising:
a captured image acquiring unit that acquires a plurality of captured images of a swing of a golf club;
a specific position detecting unit that detects the position of a neck of the golf club included in each of the captured images;
a trajectory information generating unit that generates trajectory information of the position of the neck by linking positions of the neck which are detected in each of the captured images in the order that the plurality of captured images are captured; and
a display control unit that displays the trajectory information of the position of the neck.

2. The display control apparatus as defined in Claim 1, wherein:
the specific position detecting unit inputs each captured image acquired by the captured image acquiring unit into a learned model obtained by machine learning relationships between a plurality of captured images of a golf club which are captured in advance and position information of a neck of the golf club included in each of the captured images, to detect the position of the neck in each of the captured images.

3. The display control apparatus as defined in one of Claims 1 and 2, wherein:
the specific position detecting unit detects the position of a grip of the golf club included in each of the captured images.

4. The display control apparatus as defined in Claim 3, wherein:
the display control unit displays a straight line that connects the position of the neck and the position of the grip which are detected by the specific position detecting unit.

5. The display control apparatus as defined in Claim 1, wherein:
the display control unit captures the plurality of captured images as a video, and displays the trajectory information of the position of the neck up to and including the point in time at which each of the captured images was captured.

6. A display control method, comprising:
acquiring a plurality of captured images of a swing of a golf club, detects the position of a neck of the golf club which is included in each of the captured images;
generating trajectory information of the position of the neck by linking positions of the neck which are detected in each of the captured images in the order that the plurality of captured images are captured; and
displaying the trajectory information of the position of the neck.

7. A display control program that causes a computer to execute the steps of:
acquiring a plurality of captured images of a swing of a golf club;
detecting the position of a neck of the golf club which is included in each of the captured images;
generating trajectory information of the position of the neck by linking positions of the neck which are detected in each of the captured images in the order that the plurality of captured images are captured; and
displaying the trajectory information of the position of the neck.
